# FASCICULE DE BREVET EUROPEEN

(11) **EP 1 358 281 B1**
(45) Date de publication et mention de la délivrance du brevet: **14.02.2007**
(21) Numéro de dépôt: 01990604.9
(22) Date de dépôt: 20.12.2001
(51) Int. Cl.: C09D 11/00

(54) **COMPOSITION LIQUIDE COLOREE POUR SURLIGNEUR**
FARBFLÜSSIGKEIT FÜR REDIGIERSTIFT
COLOURED LIQUID COMPOSITION FOR EDITING PEN

(30) Priorité: 22.12.2000 FR 0016946
(43) Date de publication de la demande: 05.11.2003
(73) Titulaire: CONTE S.A., 62205 Boulogne sur Mer Cédex (FR)
(72) Inventeur: DUEZ, José, F-62280 St Martin Boulogne (FR); BETHOUART, Carine, F-62280 St Martin Boulogne (FR)
(74) Mandataire: Hennion, Jean-Claude
(86) Numéro de dépôt international: PCT/FR2001/004131
(87) Numéro de publication internationale: WO 2002/051950

(56) Documents cités:
- EP-A- 0 464 304
- FR-A- 2 476 668
- US-A- 5 174 814
- US-A- 5 232 494

## Description

La présente invention concerne une composition liquide colorée pour un article d'écriture destiné au surlignage ou au marquage. En d'autres termes, cette composition liquide colorée est telle qu'elle permet de faire ressortir optiquement dans un texte préalablement écrit le passage dudit texte que l'on a surligné.

On connaît déjà trois types de compositions liquides colorées ou encres pour surligneurs permettant de mettre en valeur ou faire ressortir optiquement un texte.

Selon le premier type, il s'agit d'une encre colorée traditionnelle dans laquelle le ou les colorants sont en faible concentration pour éviter de masquer le texte qui est à mettre en valeur. Généralement, une telle encre est à base d'un solvant contenant de l'ordre de 70 % d'eau et 30 % de diéthylèneglycol.

Selon le second type, on part d'une encre concentrée qui contient 50 % d'eau et 50% de colorant fluorescent enrobé dans des résines mises en émulsion dans l'eau. Cette encre concentrée rentre dans la constitution de la composition liquide colorée destinée au surligneur à raison de 20 à 30 % en poids, le complément de la composition étant constitué d'un agent rétenteur d'eau comme la glycérine, le sorbitol, le di-éthylène glycol ou le tri-éthylène glycol qui permet à la pointe de l'article d'écriture de ne pas sécher trop rapidement.

Selon le troisième type, la composition liquide colorée met en oeuvre des colorants fluorescents solubles dans l'eau avec nécessité d'adapter les caractéristiques physico-chimiques de la composition pour obtenir un compromis entre l'effet fluorescent et les propriétés d'usage de l'article d'écriture. On connaît par exemple une composition liquide colorée de ce type dans le document EP 0 464 304 qui est à base d'une solution aqueuse de l'acide hydroxypyrènetrisulfonique, à pH basique. Une telle composition contient une proportion de 5 à 20 % en poids par rapport au poids total du liquide de mono-, di-, ou tri-saccharides provenant de la réduction des polyols dont ils dérivent ou du mélange des dites substances.

Les compositions liquides colorées pour surligneurs, qu'elles soient de l'un ou l'autre des trois types précités, présentent le même défaut lorsqu'il s'agit de surligner un texte qui a été préalablement écrit avec un stylo-plume ou un roller (feutre à bille) dont l'encre est formulée à base de colorants solubles dans l'eau. En effet, on remarque dans ce cas que la composition liquide colorée du surligneur détrempe l'encre du texte et dissout partiellement les colorants que cette encre contient. On constate de ce fait que dans les passages surlignés il y a un étalement des colorants du texte écrit, ce qui est d'un effet particulièrement inesthétique. De plus, on observe une certaine pollution de la pointe du surligneur par les colorants partiellement dissous de l'encre du texte écrit.

Le but que s'est fixé le demandeur est de pallier les inconvénients précités.

Ce but est parfaitement atteint par la composition liquide colorée pour surligneur qui de manière connue comprend de l'eau et un élément coloré. De manière caractéristique, cette composition liquide colorée contient une proportion, en poids, de 10 à 30 % d'eau et d'au moins 40% d'un composant liquide ayant une tension de surface supérieure à 40mN/m.

La présence minime d'eau permet de mettre en oeuvre des éléments colorés solubles dans l'eau sans toutefois permettre la dissolution des colorants contenus dans l'encre de l'écriture à surligner. La proportion du composant liquide ayant une tension de surface supérieure à 40 mN/m évite la pénétration de la composition liquide colorée dans le support d'écriture, s'agissant de papier.

Dans une variante préférée de réalisation, l'élément coloré est un solvant traceur dont l'aspect fluorescent est révélé à pH basique, tel que l'acide hydroxypyrènetrisulfonique (pyranine, Color Index Solvant Green 7 n° 59040), avec un pH compris entre 8 et 9. De préférence, dans ce cas, le composant à tension de surface supérieure à 40 mN/m est la triéthanolamine, celle-ci ayant été partiellement neutralisée par un acide, notamment l'acide chlorhydrique pour obtenir le pH basique compris entre 8 et 9. Cette neutralisation permet d'enrichir la composition liquide colorée en un sel d'ammonium quaternaire qui limite la pénétration de la composition dans le support d'écriture, s'agissant du papier. De plus, il a été observé que si l'on ne réalisait pas cette neutralisation à l'acide chlorhydrique, la composition liquide coloré présenterait, du fait de la proportion importante de triéthanolamine, une viscosité trop importante pour permettre la diffusion normale de l'encre dans le réseau capillaire de l'article d'écriture. Cette neutralisation permet d'abaisser la viscosité dans des conditions qui permettent un fonctionnement normal de l'article.

L'ajustement de la viscosité requise pour un fonctionnement normal de l'article peut également être réalisé grâce à une certaine proportion d'un alcool primaire, comprise entre 1 et 20 % en poids. Ce peut être l'alcool éthylique, propylique ou butylique par exemple.

De plus, la limitation de la pénétration de la composition liquide colorée dans le support papier peut encore être ajustée par la mise en oeuvre, dans la composition, d'une résine acrylique en émulsion, dans une proportion de l'ordre de 2 à 15 % en poids.

On peut bien sûr mettre en oeuvre d'autres types d'éléments colorés, notamment un colorant fluorescent soluble dans l'eau par exemple Acid Blue N°9.

Par ailleurs, il convient de choisir, au cas par cas, le composant liquide dont la tension en surface est supérieure à 40 mN/m, par exemple dans le groupe composé de la triéthanolamine, la glycérine (ou glycérol), le sorbitol et les glycols.

Un composant liquide préféré consiste dans le produit de la réaction de la glycérine (ou glycérol) sur l'urée, dont la formule développée est: 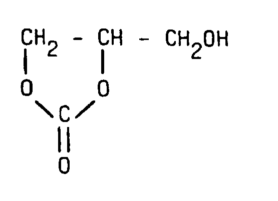 Sa tension de surface est de l'ordre de 64,5 mN/m et sa viscosité de l'ordre de 150 cPo. Il est donc possible d'en incorporer une plus grande quantité de l'ordre de 80% et de diminuer corrélativement la proportion d'eau, de l'ordre de 10% dans la composition liquide colorée pour surligneur, comparativement à d'autres composants plus visqueux, tels que la glycérine.

La présente invention sera mieux comprise à la lecture de la description qui va être faite d' exemples de réalisation d'une composition liquide colorée pour surligneur à base d'acide hydroxypyrènetrisulfonique en solution alcaline.

On connaît par le document EP 0 464 304 une composition liquide colorée utilisable dans les articles d'écriture du type surligneurs ou marqueurs, qui est à base d'une solution aqueuse présentant un pH situé dans le domaine alcalin, d'acide hydroxypyrènetrisulfonique, connu sous la dénomination pyranine, référence Color Index Solvant Green 7 n° 59040. Dans ce document, la composition liquide colorée contient une proportion de 5 à 20% en poids par rapport au poids total de liquide, de mono-, di-, ou tri-saccharides provenant de la réduction des polyols dont ils dérivent ou du mélange des dites substances. Cette addition de mono-, di-, ou tri-saccharides, permet, selon ce document, d'obtenir une qualité exceptionnelle du surlignage sur les types de papier les plus variés avec une très grande amélioration de la stabilité à la lumière du marquage.

Cependant, selon le demandeur, lorsque le surlignage intervient sur un texte qui est écrit avec un stylo-plume ou un roller dont l'encre est formulée à base de colorants solubles dans l'eau, on obtient un étalement des colorants du passage que l'on surligne, et également une certaine pollution de la pointe du surligneur avec les dits colorants.

La composition liquide colorée dont la formule pondérale va être donnée ci-après permet d'éviter ces inconvénients. Cette composition est également à base de pyranine en solution alcaline.

| | |
|---|---|
| Pyranine (Color Index Solvant Green 7 n° 59040) | 1 à 3% |
| Triéthanolamine 85 % (neutralisée Avec de l'acide chlorhydrique concentré 22 moles) | 42,5 à 70% |
| Eau | 10 à 30 % |
| Résine styrène acrylique en émulsion à 50 % d'eau | 2 à 15 % |
| Alcool primaire | 1 à 20 % |

La triéthanolamine a une tension de surface qui est de 47,5 mN/m.
L'ajout d'acide chlorhydrique concentré permet de neutraliser partiellement la triéthanolamine pour atteindre un pH compris entre 8 et 9, nécessaire pour révéler l'effet fluorescent jaune intense de la pyranine. S'agissant de la résine styrène acrylique en émulsion, il peut s'agir par exemple de la référence Joncryl J90 commercialisée par la firme Goodrich.

Quant à l'alcool primaire, il s'agit de préférence de l'alcool éthylique, de l'alcool propylique ou encore de l'alcool butylique.

L'ajout de cet alcool primaire a pour but de réduire la viscosité de la composition liquide colorée sans faire chuter de manière sensible sa tension de surface, dont on souhaite qu'elle soit suffisamment élevée pour éviter qu'elle ne traverse le support papier, ce qui a pour effet d'altérer le verso de la feuille sur laquelle on a utilisé le surligneur.

La particularité de la composition liquide colorée de l'invention est de répondre à toutes les exigences suivantes :
- révéler le caractère fluorescent de la pyranine par le pH alcalin de la composition,
- permettre la dissolution de la pyranine par la présence d'eau,
- avoir une viscosité suffisamment basse pour permettre la diffusion normale de la composition dans l'article d'écriture, par capillarité,
- avoir une tension de surface suffisamment élevée pour limiter la pénétration de la composition dans le support papier,
- avoir une quantité réduite d'eau pour éviter l'entraînement des colorants solubles dans l'eau de l'encre du passage que l'on surligne.

Toutes ces exigences sont remplies par la composition liquide colorée dont la formule pondérale a été indiquée ci-dessus. Toutefois la présente invention n'est pas limitée à cet exemple de réalisation qui met en oeuvre la pyranine comme élément coloré et la triéthanolamine comme composant ayant une tension de surface supérieure à 40mN /m. D'autres types d'éléments colorés peuvent être utilisés , notamment des colorants fluorescents solubles dans l'eau qui n'ont pas besoin d'être en pH basique.

Quel que soit l'élément coloré utilisé, il est possible de mettre en oeuvre d'autres composants liquides à tension de surface supérieure à 40mN/m, par exemple la glycérine (ou glycérol), le sorbitol ou des glycols.

La glycérine a une tension de surface de l'ordre de 72mN/m, mais une viscosité très élevée, de l'ordre de 1200 cPo. Elle convient, mais nécessite une proportion d'eau assez importante, de l'ordre de 25%.

Par contre on préfère le composant C₄H₆O₄ résultant de la réaction de la glycérine et de l'urée qui a comme formule développée : 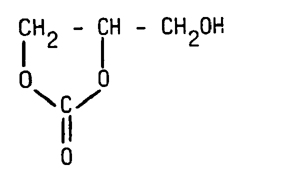 Qui a une tension de surface de l'ordre de 64,5 mN/m mais une viscosité de l'ordre de 150cPo. Il est ainsi possible de mettre en oeuvre une proportion minimale d'eau de 10%.

Les deux exemples ci-après A et B donnent des compositions liquides de formulation proche, avec la glycérine (A) et le composant C₄H₆O₄(B).

| | (A) | (B) |
|---|---|---|
| pyramine | 3% | 3% |
| glycérine | 64,75% | O |
| composant C4H604 | O | 80,5% |
| eau | 25% | 10% |
| triéthanolamine neutralisée | 0,55% | 2,5% |
| n.propanol | 4% | 4% |

Il est à noter que la valeur de la viscosité requise pour un fonctionnement normal de l'article est fonction des éléments constituant l'article, tels que la tête d'écriture, le connecteur capillaire, les fibres et les liants composant le réservoir fibreux. Il est donc possible de choisir ces éléments pour tenir compte de la viscosité de la composition liquide colorée ou inversement de choisir ladite composition en fonction de l'article. A titre indicatif, mais non exclusif, la viscosité de la composition liquide colorée pour un fonctionnement normal d'un article surligneur peut se situer entre 10 et 30cPo.

## Revendications

1. Composition liquide colorée pour surligneur comprenant de l'eau et un élément coloré **caractérisée en ce que** la proportion d'eau en poids est comprise entre 10 et 30% et **en ce qu'**il comprend au moins 40% d'un composant liquide ayant une tension de surface supérieure à 40mN/m.

2. Composition selon la revendication 1 **caractérisée en ce que** l'élément coloré est un solvant traceur à aspect fluorescent à pH basique, notamment l'acide hydroxypyrènétrisulfonique et **en ce que** le pH de la composition est compris entre 8 et 9.

3. Composition selon la revendication 2 **caractérisée en ce que** le composant à tension de surface supérieure à 40 mN/m est la triéthanolamine et **en ce que** la composition contient un acide pour neutraliser partiellement la triéthanolamine pour obtenir le pH basique, par exemple de l'acide chlorhydrique.

4. Composition selon l'une des revendications 1 à 3 **caractérisée en ce qu'**elle contient un alcool primaire dans une proportion de 1 à 20% en poids.

5. Composition selon l'une des revendications 1 à 4 **caractérisée en ce qu'**elle contient une résine acrylique en émulsion dans une proportion de 2 à 15% en poids.

6. Composition selon la revendication 1 **caractérisée en ce que** le composant à tension de surface supérieur à 40 mN/m est choisi parmi le groupe composé de la glycérine, le sorbitol, les glycols, l'éthanolamine.

7. Composition selon la revendication 1 **caractérisée en ce que** le composant à tension de surface supérieur à 40mN/m est un composant C₄H₆O₄, de formule développée : 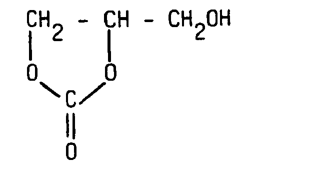 résultant de la réaction de la glycémie et de l'urée.

8. Composition selon la revendication 7 **caractérisée en ce que** la proportion en eau est de l'ordre de 10% et la proportion en composant C₄H₆O₄ de l'ordre de 80%.

## Claims

1. Coloured liquid composition for an editing pen, containing water and a coloured element, **characterized in that** the weight proportion of water lies between 10 and 30 % and **in that** it contains at least 40% of a liquid component having a surface tension of more than 40 mN/m.

2. Composition as in claim 1, **characterized in that** the coloured element is a tracer solvent of fluorescent appearance and basic pH, in particular hydroxypyrenetrisulphonic acid, and **in that** the pH of the composition lies between 8 and 9.

3. Composition as in claim 2, **characterized in that** the component with a surface tension of more than 40 nM/m is triethanolamine, and **in that** the composition contains an acid to partly neutralize the triethanolamine to obtain the basic pH, e.g. hydrochloric acid.

4. Composition as in any of claims 1 to 3, **characterized in that** it contains a primary alcohol in a weight proportion of 1 to 20 %.

5. Composition as in any of claims 1 to 4, **characterized in that** it contains an acrylic resin in emulsion in a weight proportion of 2 to 15 %.

6. Composition as in claim 1, **characterized in that** the component with a surface tension of more than 40 mN/m is chosen from the group consisting of glycerine, sorbitol, glycols, ethanolamine.

7. Composition as in claim 1, **characterized in that** the component with a surface tension of more than 40mN/m is a C₄H₆O₄ component having the structural formula: 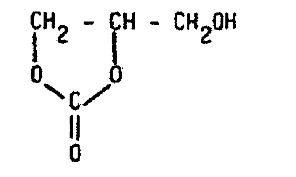 resulting from the glycerine and urea reaction.

8. Composition as in claim 7, **characterized in that** the proportion of water is in the order of 10 % and the proportion of C₄H₆O₄ component is in the order of 80 %.

## Patentansprüche

1. Flüssige farbige Zusammensetzung für einen Marker, umfassend Wasser und einen farbigen Bestandteil, **dadurch gekennzeichnet, daß** der Wasseranteil zwischen 10 und 30 Gew.% liegt, und daß sie wenigstens 40% einer flüssigen Komponente mit einer Oberflächenspannung über 40 mN/m umfaßt.

2. Zusammensetzung nach Anspruch 1 **gekennzeichnet**, daß der farbige Bestandteil ein Indikator mit fluoreszierendem Aussehen bei basischem pH ist, insbesondere Hydroxypyrentrisulfonsäure, und **dadurch**, daß der pH der Zusammensetzung zwischen 8 und 9 liegt.

3. Zusammensetzung nach Anspruch 2, **dadurch gekennzeichnet, daß** die Verbindung mit einer Oberflächenspannung über 40 mN/m Triethanolamin ist und daß die Zusammensetzung eine Säure, zum Beispiel Salzsäure, enthält; um teilweise das Triethanolamin zu neutralisieren, um den basischen pH zu erhalten.

4. Zusammensetzung nach einem der Ansprüche 1 bis 3, **dadurch gekennzeichnet, daß** sie einen primären Alkohol in einem Anteil von 1 bis 20 Gew.% enthält.

5. Zusammensetzung nach einem der Ansprüche 1 bis 4, **dadurch gekennzeichnet, daß** sie ein Acrylharz in Emulsion in einem Anteil von 2 bis 15 Gew.% enthält.

6. Zusammensetzung nach Anspruch 1, **dadurch gekennzeichnet, daß** die Verbindung mit einer Oberflächenspannung größer als 40 mN/m gewählt ist aus der Gruppe, die besteht aus Glycerin, Sorbitol, Glycolen, Ethanolamin.

7. Zusammensetzung nach Anspruch 1, **dadurch gekennzeichnet, daß** die Verbindung mit einer Oberflächenspannung über 40 mN/m eine C₄H₆O₄-Verbindung mit einer dargestellten Formel: 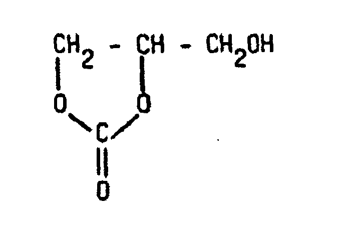 ist, die aus der Reaktion des Blutzuckers und des Harnstoffs resultiert.

8. Verbindung nach Anspruch 7, **dadurch gekennzeichnet, daß** der Wasseranteil in Größenordnung von 10% und der Anteil an C₄H₆O₄-Verbindung in der Größenordung von 80% ist.
